# EUROPEAN PATENT SPECIFICATION

(11) **EP 2 610 579 B1**
(45) Date of publication and mention of the grant of the patent: **30.09.2015**
(21) Application number: 12382286.8
(22) Date of filing: 19.07.2012
(51) Int. Cl.: G01B 3/20, B62D 65/00, G01B 5/14

(54) **Set of tools for measuring the levels of leak-tightness in moving elements assembled in automobile bodies**
Werkzeugsatz zum Messen der Leckdichtheit beweglicher, in Automobilkarosserien montierter Elemente
Ensemble d'outils permettant de mesurer les niveaux d'étanchéité dans des éléments mobiles assemblés dans des carrosseries de véhicules

(30) Priority: 26.12.2011 ES 201131328 U
(43) Date of publication of application: 03.07.2013
(73) Proprietor: Seat, S.A., 08760 Martorell - Barcelona (ES)
(72) Inventor: Jimenez Martin, Pedro, 08760 Barcelona (ES); Rodriguez Santos, Joaquin Amador, 08760 Barcelona (ES); Salvador Garcia, Samuel, 08760 Barcelona (ES)
(74) Representative: Isern-Jara, Nuria

(56) References cited:
- EP-A2- 1 671 876
- DE-A1- 10 015 155
- DE-A1-102007 060 820
- KR-A- 20070 059 661
- US-A1- 2002 052 710

## Description

### Technical Field of the Invention

The present invention belongs to the technical field of automotive, specifically to the technical field of assembling automobile body, and more specifically to assembling, controlling and checking moving closure elements in the body. Although the possibility of using same in different industries requiring leak-tightness control or element closure is not dismissed, the present invention particularly relates to a set of tools for measuring the levels of assembly and leak-tightness in moving door and boot lid elements assembled in the bodies.

### Background of the Invention

The harsh quality controls existing today in the automotive sector means that the clearance or levels of leak-tightness existing between moving closure elements when they are closed and the body, i.e., the distance between the edge of the closed door or boot lid and the body is exhaustively controlled.

The level of leak-tightness is the measurement ensuring both the hardness of closing the doors, bonnet and boot lid, and the possible entry of water into the cabin of the vehicle, and it also assures the appearance of the elements by assuring their fit.

The stability of said level must be assured for ensuring the viability of the project and its functionality.

It is fundamental that this level is within the pre-established limits, since said clearances or levels will be closed by means of a rubber seal with a predetermined width.

Currently, many of these levels of leak-tightness or clearances are measured by means of a conventional calliper. For taking many of these measurements, the operator must enter the body, which can cause damage to different elements of the automobile.

Some clearances cannot be measured with the calliper due to their configuration or their shape. In these cases, the operators tend to use templates made of mouldable materials or already marked conical parts for measuring the level of leak-tightness which, in addition to increases its costs, greatly slows down the measurement taking process.

Measuring means achieving an efficient measurement of the levels of leak-tightness or clearances between moving closure elements and the body, preventing the drawbacks existing in the above measuring means of the state of the art were therefore desirable.

### Description of the Invention

The present invention solves the problems existing in the state of the art by means of a set of tools for measuring the levels of leak-tightness in moving elements assembled in automobile bodies. These moving elements assembled in bodies refer to closure elements, mainly doors and boot lids of the automobile, and the level of assembly or level of leak-tightness refers to the clearance remaining between the edge of the door or boot lid once closed and the edge of the adjacent body.

This set of tools for measuring the levels of leak-tightness is formed by a measuring tool and by a levelling stop.

The measuring tool is substantially prismatic and has a fixing housing in which there is inserted the flange of the edge of the body of the area in which the moving element closes. Likewise, the measuring tool has magnets or clips for fixing the measuring tool to the body.

The measuring tool also has a sliding element traversing it and it is movable longitudinally through same. This sliding element has an end and a safety stop contacting the body and the edge of the moving element respectively. The sliding element has a mark between the end and the safety stop which provides the level measurement on a graduated scale provided in the measuring tool, both elements forming a nonius.

The levelling stop is also substantially prismatic and acts as a stop between the edge of the body and the edge of the moving element, thus preventing the edge of the moving element from getting close to the body beyond a pre-established level, thus operating as a levelling element. The levelling stop has another fixing housing, in which there is also inserted the flange of the edge of the body of the area in which the moving element closes, and it also has magnets or clips for fixing said levelling stop to the body.

Thus, by means of this set of tools for measuring the level of leak-tightness the reading of the results obtained is direct and easy to interpret.

Furthermore, the work of the operator is facilitated since he/she does not have to enter it preventing possible damage inside the body during measurement taking.

For taking the measurement by means of the set of measuring tools of the present invention, first the measuring tool is assembled in the area to be measured, between the body and the edge of the moving element, either a door or boot lid. The measuring tool is assembled by means of the fixing housing in which there is introduced the body (fixed part) with the position of the sliding element at its maximum travel. The levelling stop is then assembled for assuring the levelling of the moving element in the body, preventing its clearance from exceeding a certain pre-established value. Once the levelling stop is assembled both the body and the moving element will exert pressure on the measuring tool, causing the sliding element to move until its end and safety stop contact the body and the moving element respectively, the nonius formed by the graduated scale and the mark marking a specific measurement.

Therefore, productivity and ergonomics improvement with respect to the current way of measuring, flexibility of measuring with this means because it can be performed without any type of installation and production control and analysis speed can be highlighted among the advantages offered by the present invention.

### Description of the Drawings

To better understand the invention, an embodiment of the invention referring to a set of drawings will be described below in an illustrative but non-limiting manner.
Figure 1 is a perspective view of a particular embodiment of a measuring tool object of the present invention in a first measurement position showing the ends of the sliding element.
Figure 2 is a perspective view of the measuring tool of Figure 1 in a second measurement position in which the sliding element has been moved.
Figure 3 is a view of the measuring tool of Figures 1 and 2 showing the fixing housing.
Figure 4 is a perspective view of a different embodiment of a measuring tool object of the present invention in a first measurement position showing the ends of the sliding element.
Figure 5 is a perspective view of the measuring tool of Figure 4 in a second measurement position in which the sliding element has been moved.
Figure 6 is a side view of the measuring tool of Figures 4 and 5 showing the fixing housing.
Figure 7 is a perspective view of an embodiment of the levelling stop object of the present invention.
Figure 8 is a side view of the levelling stop of Figure 7 showing the fixing housing.
Figure 9 is a schematic view showing a measuring tool fixed to the edge of a boot lid showing how the flange of the edge is housed in the fixing housing.
Figure 10 is a schematic view showing a measuring tool fixed to the edge of a door.
Figure 11 is a schematic view showing a levelling stop housed in a boot lid.

These drawings refer to a set of elements including:
1. measuring tool
2. fixing housing
3. sliding element of the measuring tool
4. end of the sliding element
5. intermediate mark of the sliding element
6. graduated scale
7. levelling stop
8. safety stop

### Description of Preferred. Embodiments of the Invention

The object of the-present invention is a set of tools for measuring the levels of leak-tightness in moving elements assembled in automobile bodies. These moving elements are closure elements of the body, mainly doors and boot lids, the level of assembly or the level of leak-tightness being the clearance existing between the edge of the door or boot lid once closed and the edge of the body in which it is arranged.

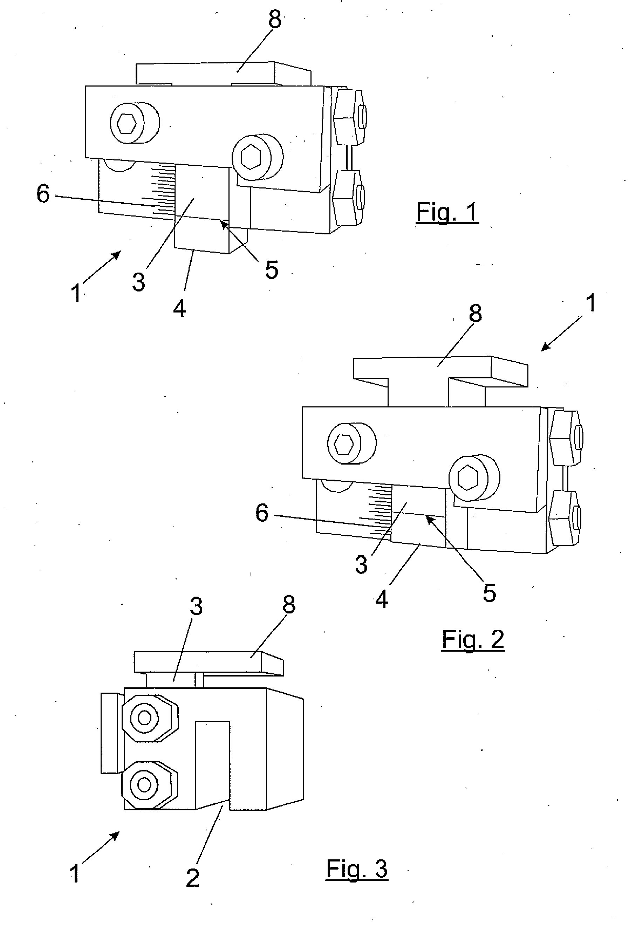

As can be seen in Figures 1 to 6, the set of tools for measuring the levels of leak-tightness object of the present invention has a substantially prismatic measuring tool 1 which in turn has a fixing housing 2, in which there is inserted the flange of the edge of the body of the area in which the moving element closes. Furthermore, the measuring tool has magnets for fixing the measuring tool 1 to the body by means of magnetic forces. The measuring tool 1 has a sliding element 3 for level measurement which traverses the measuring tool 1, being longitudinally movable through said measuring tool 1. This sliding element 3 has an end 4 and a safety stop 8, one of them contacting the body and the other the edge of the moving element. Depending of the existing clearance, the sliding element 3 is moved along the inside of the prismatic body of the measuring tool 1, until both ends contact the body and the edge of the moving element respectively. A mark 5 in the sliding element 3, provided at an intermediate point between the end 4 and the safety stop 8 provides the level measurement on a graduated scale 6 depicted on a surface of the measuring tool 1, both elements forming a nonius.

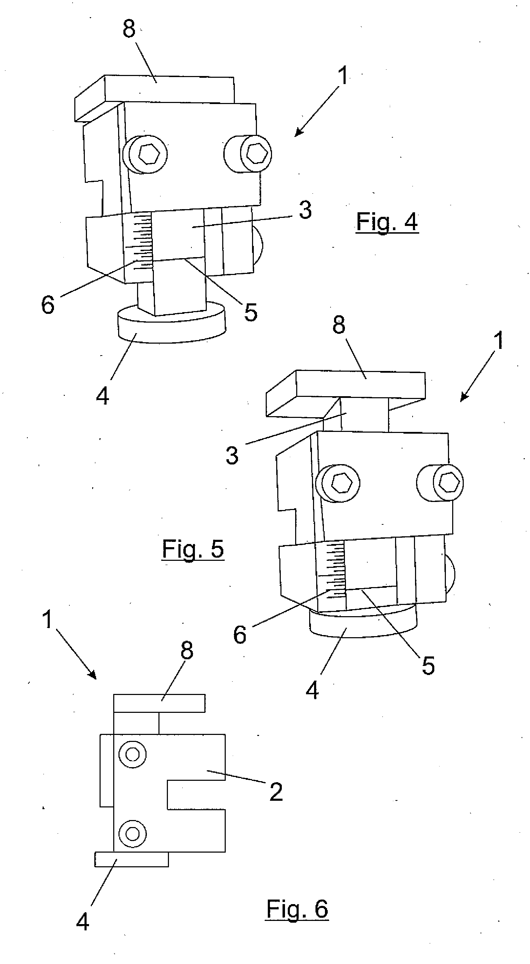

Figures 1 to 3 show a particular embodiment of the measuring tool 1 for the measuring the levels of leak-tightness in side doors with closure in vertical plane, while Figures 4 to 6 show a particular embodiment of the measuring tool 1 for measuring the levels of leak-tightness measurement in boot lids with closure in horizontal plane. The measuring tool 1 has a metal part or element for tightening clearances between the sliding element 3 and the fixed block.

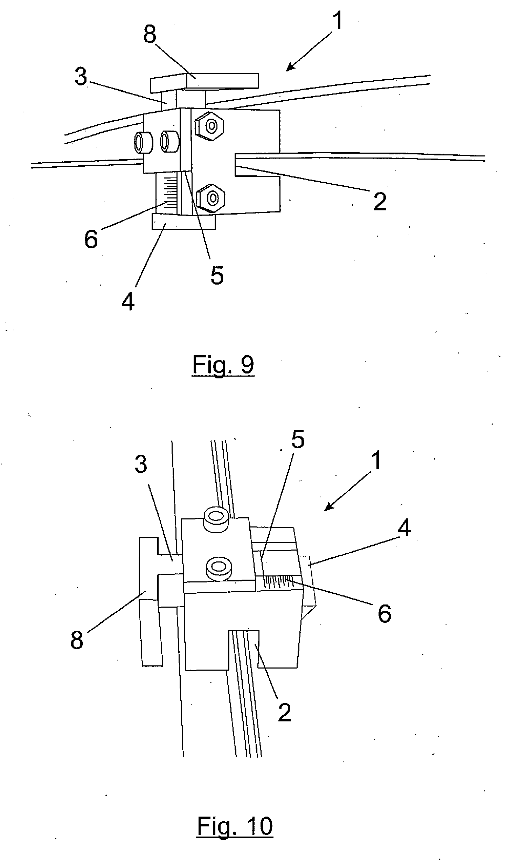

Figure 9 shows the fixing of the measuring tool 1 in the flange of the edge of a boot lid, while Figure 10 shows the fixing of a measuring tool 1 in the flange of the edge of a door.

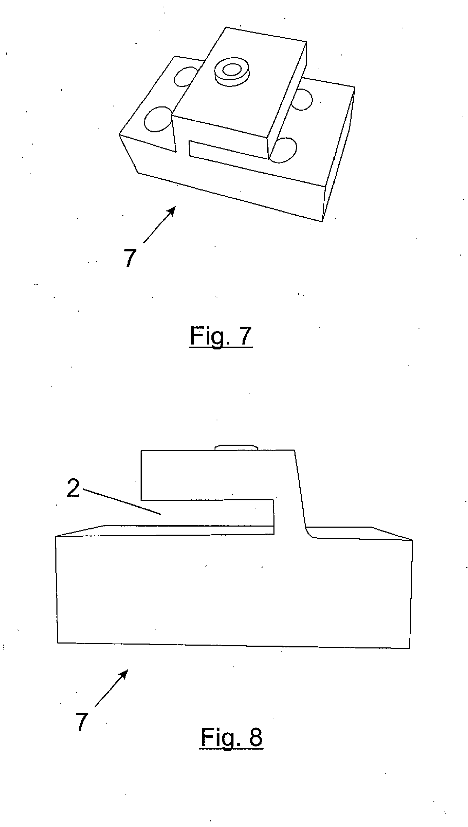

Additionally, as seen in Figures 7 to 8, the set of tools for measuring the levels of leak-tightness has a levelling stop 7 which is also substantially prismatic, and which is located close to the measuring tool 1, acting as a stop between the edge of the body and the edge of the moving element, and preventing the edge of the moving element from getting close to the body beyond a pre-established level. This levelling stop 7 also has a fixing housing 2, in which there is inserted the flange of the edge of the body of the area in which the moving element closes. The levelling stop 7 also has a plurality of magnets therein for fixing the levelling stop 1 to the body.

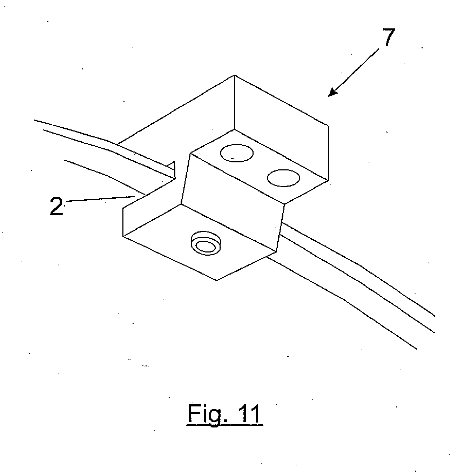

Figure 11 shows the fixing of a levelling stop 7 to the flange of the edge of a boot lid.

The measuring tool 1 is preferably made of steel to increase its resistance and prevent its wear. The measuring tool 1 additionally has protections in its areas contacting the body and the edge of the moving element. Specifically, for avoiding damage such as scratches, portions of soft, non-deformable material, such as for example, resin, nylon, Teflon, etc., are fixed at the end 4 of the sliding element 3.

The levelling stop 7 is made of resin, said material providing the stop with the necessary resistance, and at the same time preventing the body and the moving element from being damaged when they abut against this levelling stop 7.

According to a preferred embodiment of the invention, the magnets of the measuring tool 1 and of the levelling stop 7 are cylindrical, being arranged inside the measuring tool 1 and the levelling stop 7.

## Claims

1. A set of tools for measuring the levels of leak-tightness in moving elements assembled in automobile bodies, the moving elements being doors and boot lids, said set **characterised in that** it comprises
- a substantially prismatic measuring tool (1), comprising
- a fixing housing (2) in which there is inserted the flange of the edge of the body of the area in which the moving element closes
- a plurality of magnets for fixing the measuring tool (1) to the body,
- and a sliding element (3) traversing the measuring tool (1) and is movable longitudinally through said measuring tool (1), comprising
- an end (4) and a safety stop (8), which contact respectively with the body and the edge of the moving element respectively, and
- a mark (5) between both ends (4) providing the level measurement on
- a graduated scale (6) provided in the measuring tool (1), and
- a substantially prismatic levelling stop (7) acting as a stop between the edge of the body and the edge of the moving element, preventing the edge of the moving element from getting close to the body beyond a pre-established level, said levelling stop (7) comprising
- a fixing housing (2) in which there is inserted the flange of the edge of the body of the area in which the moving element closes close to the measuring tool (1), and
- a plurality of magnets for fixing the levelling stop (1) to the body.

2. The set of tools for measuring the levels of leak-tightness in moving elements assembled in automobile bodies according to claim 1, **characterised in that**
- the measuring tool (1) is made of steel,
- and **in that** the end (4) of the sliding element (3) comprises soft non-deformable material selected from resin, nylon, Teflon, and combination thereof.

3. The set of tools for measuring the levels of leak-tightness in moving elements assembled in automobile bodies according to any of the preceding claims, **characterised in that** the levelling stop (7) is made of resin.

4. The set of tools for measuring the levels of leak-tightness in moving elements assembled in automobile bodies according to any of the preceding claims, **characterised in that** the magnets of the measuring tool (1) are cylindrical and are arranged inside said measuring tool (1).

## Patentansprüche

1. Werkzeugsatz zum Messen der Leckdichtheit beweglicher, in Autokarosserien montierter Elemente, wobei die beweglichen Elemente Türen und Kofferraumdeckel sind, wobei der Satz **dadurch gekennzeichnet ist, dass** er im Wesentlichen ein prismatisches Messwerkzeug (1) umfasst, umfassend:
ein Befestigungsgehäuse (2), in das der Flansch des Karosserierandes des Bereichs eingeführt wird, in dem das bewegliche Element mehrere Magneten zum Befestigen des Messwerkzeugs (1) an der Karosserie schließt, und ein Gleitelement (3), das über das Messwerkzeug (1) läuft und längs durch das Messwerkzeug (1) beweglich ist, umfassend:
ein Ende (4) und einen Sicherheitsanschlag (8), die jeweils mit der Karosserie bzw. dem Rand des beweglichen Elements in Kontakt treten, und
eine Markierung (5) zwischen beiden Enden (4), welche die Pegelmessung auf einer Messskala (6) bereitstellt, die in dem Messwerkzeug (1) bereitgestellt ist, und einen im Wesentlichen prismatischen Ausgleichsanschlag (7), der als Anschlag zwischen dem Rand der Karosserie und dem Rand des beweglichen Elements fungiert und verhindert, dass der Rand des beweglichen Elements in die Nähe der Karosserie über einen zuvor festgelegten Pegel hinaus gelangt, wobei der Ausgleichsanschlag (7) umfasst:
ein Befestigungsgehäuse (2), in den der Flansch des Karossierandes des Bereichs, in dem das bewegliche Element in der Nähe des Messwerkzeugs (1) schließt, eingeführt wird, und mehrere Magneten zum Befestigen des Ausgleichsanschlags (7) an der Karosserie.

2. Werkzeugsatz zum Messen der Leckdichtheit beweglicher, in Automobilkarosserien montierter Elemente nach Anspruch 1, **dadurch gekennzeichnet, dass** das Messwerkzeug (1) aus Stahl hergestellt ist,
und dadurch, dass das Ende (4) des gleitenden Elements (3) ein weiches, nicht verformbares Material umfasst, das ausgewählt ist aus Harz, Nylon, Teflon und Kombinationen davon.

3. Werkzeugsatz zum Messen der Leckdichtheit beweglicher, in Automobilkarosserien montierter Elemente nach einem der vorstehenden Ansprüche, **dadurch gekennzeichnet, dass** der Ausgleichsanschlag (7) aus Harz hergestellt ist.

4. Werkzeugsatz zum Messen der Leckdichtheit beweglicher, in Automobilkarosserien montierter Elemente nach einem der vorstehenden Ansprüche, **dadurch gekennzeichnet, dass** die Magneten des Messwerkzeugs (1) zylindrisch sind und innerhalb des Messwerkzeugs (1) angeordnet sind.

## Revendications

1. Ensemble d'outils pour mesurer les niveaux d'étanchéité dans des éléments mobiles assemblés dans des carrosseries automobiles, les éléments mobiles étant des portes et couvercles de coffre, ledit ensemble étant **caractérisé en ce qu'**il comprend :
un outil de mesure (1) sensiblement prismatique, comprenant :
un logement de fixation (2) dans lequel est introduit le rebord du bord de la carrosserie de la zone dans laquelle l'élément mobile ferme,
une pluralité d'aimants pour fixer l'outil de mesure (1) à la carrosserie, et
un élément coulissant (3) qui traverse l'outil de mesure (1) et peut se déplacer longitudinalement à travers ledit outil de mesure (1), comprenant :
une extrémité (4) et une butée de sécurité (8), qui sont en contact respectivement avec la carrosserie et le bord de l'élément mobile, et
une marque (5) entre les deux extrémités (4) fournissant la mesure de niveau sur
une échelle graduée (6) disposée dans l'outil de mesure (1), et
une butée de calage (7) sensiblement prismatique qui agit comme butée entre le bord de la carrosserie et le bord de l'élément mobile, au bord de l'élément mobile, empêchant le bord de l'élément mobile d'approcher de la carrosserie au-delà d'un niveau prédéterminé, ladite butée de calage (7) comprenant :
un logement de fixation (2) dans lequel est introduit le rebord du bord de la carrosserie de la zone dans laquelle l'élément mobile ferme près de l'outil de mesure (1), et
une pluralité d'aimants pour fixer la butée de calage (7) à la carrosserie.

2. Ensemble d'outils pour mesurer les niveaux d'étanchéité dans des éléments mobiles assemblés dans des carrosseries automobiles selon la revendication 1, **caractérisé en ce que** :
l'outil de mesure (1) est fabriqué en acier, et **en ce que**
l'extrémité (4) de l'élément coulissant (3) comprend une matière non déformable souple choisie parmi résine, nylon, Téflon et une combinaison de celles-ci.

3. Ensemble d'outils pour mesurer les niveaux d'étanchéité dans des éléments mobiles assemblés dans des carrosseries automobiles selon l'une des revendications précédentes, **caractérisé en ce que** la butée de calage (7) est fabriquée en résine.

4. Ensemble d'outils pour mesurer les niveaux d'étanchéité dans des éléments mobiles assemblés dans des carrosseries automobiles selon l'une quelconque des revendications précédentes, **caractérisé en ce que** les aimants de l'outil de mesure (1) sont cylindriques et sont disposés à l'intérieur dudit outil de mesure (1).
